# EUROPÄISCHE PATENTSCHRIFT

(11) **EP 4 007 133 B1**
(45) Veröffentlichungstag und Bekanntmachung des Hinweises auf die Patenterteilung: **17.09.2025**
(21) Anmeldenummer: 21208334.9
(22) Anmeldetag: 15.11.2021
(51) Int. Cl.: H02K 5/20, H02K 9/18, H02K 9/19, H02K 7/116, H02K 7/08

(54) **ELEKTRISCHE MASCHINE MIT INTEGRIERTEM WÄRMETAUSCHER**
ELECTRIC MACHINE WITH AN INTEGRATED HEAT EXCHANGER
MACHINE ÉLECTRIQUE COMPRENANT UN ÉCHANGEUR THERMIQUE INTÉGRÉ

(30) Priorität: 25.11.2020 DE 102020214829
(43) Veröffentlichungstag der Anmeldung: 01.06.2022
(73) Patentinhaber: Valeo eAutomotive Germany GmbH, 91056 Erlangen (DE)
(72) Erfinder: HAAS, Bernd, 91056 Erlangen (DE); POLLAK, Burkhard, 91056 Erlangen (DE)
(74) Vertreter: Valeo Powertrain Systems

(56) Entgegenhaltungen:
- EP-A1- 3 028 888
- EP-A2- 2 020 735
- DE-A1- 102011 084 033
- DE-A1- 102016 110 658
- DE-A1- 102018 121 203
- SU-A1- 951 566

## Beschreibung

### TECHNISCHES GEBIET

Die Erfindung betrifft eine elektrische Maschine, einen Getriebemotor mit einem Getriebe und einer an das Getriebe gekoppelten elektrischen Maschine sowie ein Fahrzeug, das durch die genannte elektrische Maschine oder durch den genannten Getriebemotor angetrieben ist.

### STAND DER TECHNIK

Elektrische Maschinen sind häufig Teil komplexer technischer Anlagen oder Anordnungen, welche oft zumindest in Teilen gekühlt werden müssen, um die in den verschiedenen Einrichtungen der technischen Anlagen oder Anordnungen anfallende Abwärme abführen zu können. Kühlkreisläufe, bei denen ein flüssiger oder auch gasförmiger Wärmeträger für den Abtransport der Abwärme herangezogen wird, sind eine mögliche Lösung dazu. Beispielsweise kann die elektrische Maschine dazu zumindest einen ersten Kühlmittelkanal eines ersten Kühlkreislaufs aufweisen, welcher von einem Wärmeträger durchströmt ist. Beispielweise kann eine im ersten Kühlkreislauf angeordnete Pumpe die in der elektrischen Maschine entstehende Wärme mit Hilfe des Wärmeträgers zu einem Wärmetauscher transportieren, an dem die Wärme an die Umgebung abgegeben wird. Beim Wärmeträger kann es sich beispielsweise um eine Kühlflüssigkeit handeln und beim Wärmetauscher um einen Wasser-Luft-Wärmetauscher. Nicht nur die elektrische Maschine kann einen solchen Kreislauf aufweisen, sondern eben auch die anderen in technischen Anlagen oder Anordnungen enthaltenen Einrichtungen. Dies führt dazu, dass unter Umständen mehrere Kühlkreisläufe mit mehreren Wärmetauschern in den technischen Anlagen oder Anordnungen verbaut werden müssen. Insbesondere wenn der Bauraum dafür beschränkt ist, kann die sinnvolle Anordnung von Wärmetauschern problematisch werden. Beispielsweise werden Kühler in Fahrzeugen zumeist an deren Front verbaut, wo der Bauraum naturgemäß sehr begrenzt ist.

Die Dokumente EP 3 028 888 A1, DE 10 2018 121203 A1, DE 10 2011 084033 A1, DE 10 2016 110658 A1, EP 2 020 735 A2, SU 951 566 A1 offenbaren elektrische Maschinen des Standes der Technik.

### OFFENBARUNG DER ERFINDUNG

Eine Aufgabe der Erfindung ist es daher, eine verbesserte elektrische Maschine, einen verbesserten Getriebemotor sowie ein verbessertes Fahrzeug mit einer solchen elektrischen Maschine oder einem solchen Getriebemotor anzugeben. Insbesondere soll eine Möglichkeit für die Kühlung von Einrichtungen in technischen Anlagen oder Anordnungen bei nur geringem verfügbarem Bauraum angegeben werden.

Die Aufgabe der Erfindung wird durch eine elektrische Maschine gelöst, welche ein Gehäuse umfasst, einen im Gehäuse angeordneten und mit diesem fix verbundenen Stator und einen im Gehäuse angeordneten Rotor, der auf einer Rotorwelle angeordnet ist und gegenüber dem Stator um die Rotationsachse des Rotors und der Rotorwelle drehbar gelagert ist. Im Gehäuse ist im Bereich des Stators zumindest ein erster Kühlmittelkanal eines ersten Kühlkreislaufs angeordnet. Zudem ist im Gehäuse im Bereich des Stators zumindest ein zweiter Kühlmittelkanal eines zweiten Kühlkreislaufs angeordnet, und die beiden Kühlmittelkanäle und das Gehäuse der elektrischen Maschine bilden einen Wärmetauscher zwischen dem ersten Kühlkreislauf und dem zweiten Kühlkreislauf. Der zumindest eine erste Kühlmittelkanal und der zumindest eine zweite Kühlmittelkanal sind daher hydraulisch nicht miteinander verbunden, beziehungsweise sind hydraulisch voneinander getrennt.

Weiterhin wird die Aufgabe der Erfindung durch einen Getriebemotor gelöst, welcher ein Getriebe und eine an das Getriebe gekoppelte elektrische Maschine umfasst, wobei das Getriebe mit dem zumindest einen zweiten Kühlmittelkanal des zweiten Kühlkreislaufs hydraulisch verbunden ist.

Schließlich wird die Aufgabe auch durch ein Fahrzeug mit wenigstens zwei Achsen gelöst, von denen wenigstens eine angetrieben ist, wobei der besagte Antrieb zumindest teilweise oder zeitweise durch die oben genannte elektrische Maschine oder den oben genannten Getriebemotor erfolgt.

Mit Hilfe der vorgeschlagenen Maßnahmen kann die elektrische Maschine selbst als Wärmetauscher fungieren. Über den ersten Kühlkreislauf wird die elektrische Maschine als solche in an sich bekannter Weise gekühlt. An die elektrische Maschine können aber auch andere zu kühlende Einrichtungen angeschlossen werden. Dabei wird Wärme, die in der externen zu kühlenden Einrichtung entsteht, über den Wärmeträger im zweiten Kühlsystem zur elektrischen Maschine transportiert und dort in das erste Kühlsystem übertragen. Von dort wird die Wärme in der schon beschriebenen Weise zu einem Wärmetauscher beziehungsweise Kühler transportiert und dort an die Umgebung abgegeben. Somit kann die externe zu kühlende Einrichtung ebenfalls gekühlt werden, ohne dass hierzu ein gesonderter Wärmetauscher nötig wäre. Knapp verfügbarerer Bauraum kann auf diese Weise optimal genutzt werden.

Beispielsweise kann der zumindest eine erste Kühlmittelkanal in das Gehäuse der elektrischen Maschine eingegossen sein, und der zumindest eine zweite Kühlmittelkanal kann durch ein Rohr gebildet sein, welches in oder neben dem zumindest einen ersten Kühlmittelkanal angeordnet ist. Auf diese Weise können insbesondere bereits bestehende erste Kühlmittelkanäle für den zumindest einen zweiten Kühlmittelkanal genutzt werden, wodurch bereits bestehende elektrische Maschinen entsprechend aufgerüstet werden können oder bereits bestehende Gehäuse oder Gehäuseformen für den Bau weiterer elektrischer Maschinen weiter genutzt werden können.

Denkbar ist aber auch, dass der zumindest eine erste Kühlmittelkanal und der zumindest eine zweite Kühlmittelkanal in das Gehäuse der elektrischen Maschine eingegossen sind. Auf diese Weise kann das Anordnen eines Rohrs im ersten Kühlmittelkanal entfallen, wodurch der Zusammenbau der elektrischen Maschine vereinfacht wird.

Insbesondere kann die elektrische Maschine einen Dichtnippel aufweisen, welcher mit dem zumindest einen zweiten Kühlmittelkanal hydraulisch verbunden ist und für den Anschluss eines Schlauchs oder Rohrs ausgebildet ist. Auf diese Weise kann die elektrische Maschine auf einfache Weise in den zweiten Kühlkreislauf integriert werden.

Insbesondere können der zumindest eine erste Kühlmittelkanal und der zumindest eine zweite Kühlmittelkanal schraubenlinienförmig verlaufen. Grundsätzlich kann sich daher ein einziger erster Kühlmittelkanal und ein einziger zweiter Kühlmittelkanal über die Länge der elektrischen Maschine erstrecken. Der zumindest eine erste Kühlmittelkanal und der zumindest eine zweite Kühlmittelkanal können aber auch in anderer Richtung verlaufen. Insbesondere können diese - zumindest abschnittsweise - in axialer Richtung verlaufen oder entlang von Kreisen um die Rotorachse. Beispielsweise können auch mehrere erste Kühlmittelkanäle von einem ersten Sammler ausgehen und in einen zweiten Sammler münden. Ebenso können auch mehrere zweite Kühlmittelkanäle von einem ersten Sammler ausgehen und in einen zweiten Sammler münden.

An dieser Stelle wird angemerkt, dass die elektrische Maschine beziehungsweise die weitere externe Einrichtung mit den vorgeschlagenen Maßnahmen nicht nur gekühlt, sondern natürlich auch beheizt werden kann. Beispielsweise können der Antriebsmotor und ein Getriebe eines Fahrzeugs mit den vorgeschlagenen Maßnahmen bei niedrigen Außentemperaturen vorgeheizt werden. Der Wärmetransport erfolgt dabei in zur Kühlung entgegengesetzten Richtung. Eventuell kann dazu im ersten oder im zweiten Kühlkreislauf ein Heizer vorgesehen sein. Die Begriffe "kühlen" und "heizen" sind daher im Rahmen der Offenbarung austauschbar. Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn pro erstem Kühlmittelkanal zwei zweite Kühlmittelkanäle vorgesehen sind, welche unterschiedlichen Kühlkreisläufen angehören oder gegensinnig durchflossene Abschnitte eines einzigen zweiten Kühlkreislaufs bilden. Gehören die zweiten Kühlmittelkanäle unterschiedlichen Kühlsystemen an, so kann die Anzahl der zweiten Kühlsysteme verdoppelt werden, wodurch eine weitere zu kühlende Einrichtung gekühlt werden kann. Diese Vorgangsweise ist insbesondere dann von Vorteil, wenn in den beiden Kühlsystemen unterschiedliche Wärmeträger verwendet werden oder verwendet werden müssen und die zu kühlende Einrichtungen nicht in ein zweites Kühlsystem integriert werden können. Bilden die zweiten Kühlmittelkanäle gegensinnig durchflossene Abschnitte eines einzigen zweiten Kühlsystems, dann kann dadurch beispielsweise die wärmeabgebende Fläche im zweiten Kühlsystem verdoppelt und die Kühlleistung daher ebenso nahezu verdoppelt werden. Beispielsweise werden die beiden zweiten Kühlmittelkanäle dazu an einem Ende miteinander verbunden.

Vorteilhaft ist es weiterhin, wenn die Rotorwelle hohl ausgebildet ist und mit dem zumindest einen zweiten Kühlmittelkanal des zweiten Kühlkreislaufs hydraulisch verbunden ist. Auf diese Weise kann der Rotor der elektrischen Maschine durch den Wärmeträger im zweiten Kühlsystem gekühlt werden. Insbesondere kann die Rotorwelle auch Kühlbohrungen aufweisen, sodass der Wärmeträger von der Rotorwelle aus in das Innerer der elektrischen Maschine gelangen kann. Vorteilhaft ist es bei einem Getriebemotor insbesondere auch, wenn die Rotorwelle hohl ausgebildet ist und über ein auf der Rotorwelle angeordnetes Lager mit dem Getriebe hydraulisch verbunden ist und die Rotorwelle und das Lager Teil des zweiten Kühlkreislaufs sind. Auf diese Weise kann das Getriebe mit Hilfe des Wärmeträgers im zweiten Kühlsystem gekühlt werden.

Die obigen Ausgestaltungen und Weiterbildungen der Erfindung lassen sich auf beliebige Art und Weise kombinieren.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine mit einem zweiten Kühlmittelkanal, der im ersten Kühlmittelkanal verläuft;
- Fig. 2: ein schematisch dargestelltes Beispiel für die Nutzung des in der elektrischen Maschine integrierten Wärmetauschers;
- Fig. 3: eine schematisch im Halbschnitt dargestellte, beispielhafte elektrische Maschine mit zwei zweiten Kühlmittelkanälen, die im ersten Kühlmittelkanal verlaufen;
- Fig. 4: ähnlich wie die Fig. 1, jedoch mit einem an die elektrische Maschine angeflanschtem Getriebe;
- Fig. 5: eine Seitenansicht der Kühlmittelkanäle der elektrischen Maschine nach Fig. 1;
- Fig. 6: eine Seitenansicht der Kühlmittelkanäle der elektrischen Maschine nach Fig. 3;
- Fig. 7: eine Seitenansicht eines ersten und zweiten in das Gehäuse eingegossenen Kühlmittelkanals;
- Fig. 8: eine Seitenansicht eines zweiten Kühlmittelkanals, der in einer Rille des Gehäuses angeordnet ist;
- Fig. 9: ähnlich wie Fig. 5, jedoch mit abschnittsweise in Umfangsrichtung verlaufenden Kühlmittelkanälen,
- Fig. 10: ein erstes Beispiel für einen Dichtnippel;
- Fig. 11: ein zweites Beispiel für einen Dichtnippel;
- Fig. 12: zwei mit einer Rohrbrücke verbundene Dichtnippel und
- Fig. 13: eine elektrische Maschine mit Kühlmittelkanälen der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

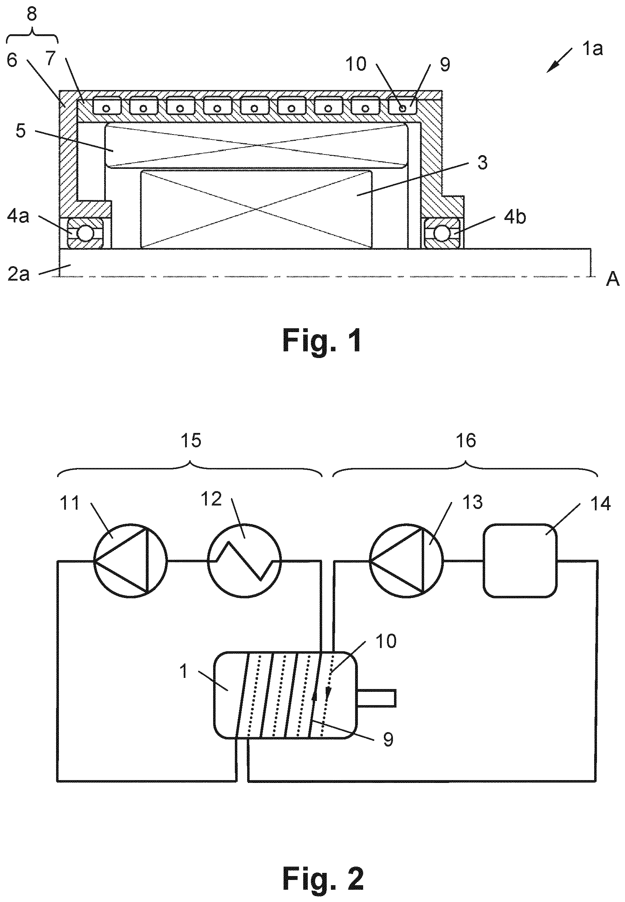

Fig. 1 zeigt einen Halbschnitt durch eine schematisch dargestellte elektrische Maschine 1a. Die elektrische Maschine 1a umfasst, eine Welle 2a mit einem darauf sitzenden Rotor 3, wobei die Welle 2a mit Hilfe von (Wälz)lagern 4a, 4b um eine Drehachse A gegenüber einem Stator 5 drehbar gelagert ist. Der Rotor 3 weist insbesondere nicht im einzeln dargestellte hintereinander angeordnete Rotorbleche sowie Rotormagnete oder eine Rotorwicklung auf. Der Stator 5 weist insbesondere nicht im einzeln dargestellte hintereinander angeordnete Statorbleche sowie eine Statorwicklung auf.

In dem in Fig. 1 gezeigten Beispiel sitzt das erste Lager 4a in einem ersten Gehäuseteil 6 und das zweite Lager 4b in einem zweiten Gehäuseteil 7. Der zweite Gehäuseteil 7 liegt im Bereich des Stators 5 radial innen, der erste Gehäuseteil 6 radial außen. Der zweite Gehäuseteil 7 nimmt in diesem Beispiel den Stator 5 auf, der mit dem zweiten Gehäuseteil 7 fix (das heißt drehstarr) verbunden ist. Die beiden Gehäuseteile 6, 7 sind vom Gehäuse 8 der elektrischen Maschine 1 umfasst und bilden im Bereich des Stators 5 einen ersten Kühlmittelkanal 9 aus, welcher - so wie das in dem in Fig. 1 gezeigten Beispiel angenommen wird - insbesondere entlang einer Schraubenlinie um den Stator 5 verlaufen kann. In der Fig. 1 ist daher der einzige und an mehreren Stellen geschnittene erste Kühlmittelkanal 9 zu sehen, der Teil eines ersten, in Fig. 1 nicht näher dargestellten, Kühlsystems ist.

Im Gehäuse 8 ist im Bereich des Stators 5 darüber hinaus ein zweiter Kühlmittelkanal 10 eines zweiten Kühlsystems angeordnet, das in Fig. 1 ebenfalls nicht näher dargestellt ist. Die beiden Kühlmittelkanäle 9, 10 und das Gehäuse 8 der elektrischen Maschine 1, insbesondere jener Teil des Gehäuses 8 im Bereich des Stators 5, bilden dadurch einen Wärmetauscher zwischen dem ersten und dem zweiten Kühlsystem.

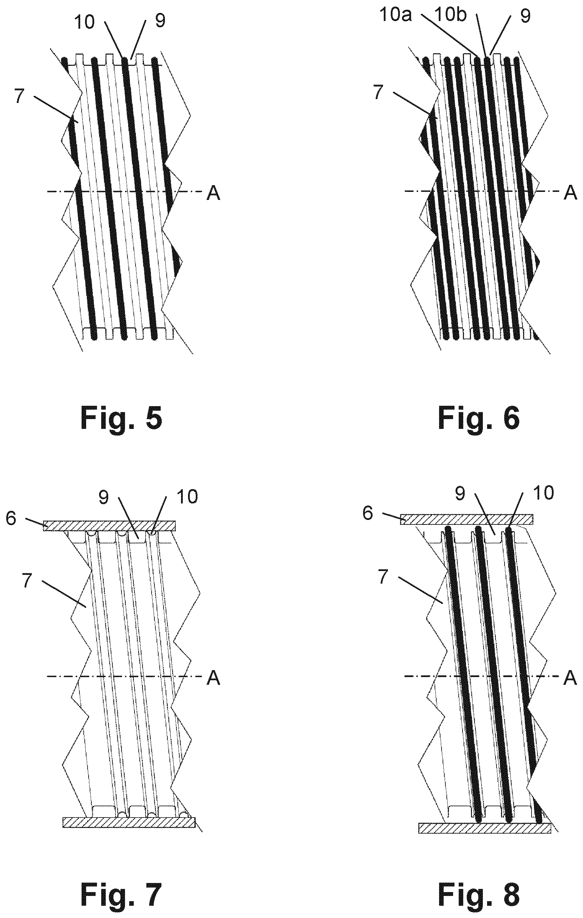

In diesem Beispiel ist der erste Kühlmittelkanal 9 in das Gehäuse 8 der elektrischen Maschine 1 eingegossen, und der zweite Kühlmittelkanal 10 ist durch ein Rohr gebildet, welches im ersten Kühlmittelkanal 9 angeordnet ist. Der zweite Kühlmittelkanal 10 verläuft in dem gezeigten Beispiel daher ebenfalls entlang einer Schraubenlinie um den Stator 5. Alternativ wäre denkbar, dass der zweite Kühlmittelkanal 10 ebenfalls in das Gehäuse 8 der elektrischen Maschine 1 eingegossen ist (vergleiche Fig. 7).

Fig. 2 zeigt nun eine schematische Darstellung, wie der durch die beiden Kühlmittelkanäle 9, 10 gebildete Wärmetauscher eingesetzt werden kann. An den ersten Kühlmittelkanal 9 ist eine erste Pumpe 11 und ein externer Wärmetauscher 12 angeschlossen. An den zweiten Kühlmittelkanal 10 ist eine zweite Pumpe 13 und eine externe zu kühlende Einrichtung 14 angeschlossen. Der erste Kühlmittelkanal 9, die erste Pumpe 11 und der externe Wärmetauscher 12 sind Teil des ersten Kühlkreislaufs oder Kühlsystems 15, der zweite Kühlmittelkanal 10, die zweite Pumpe 13 und die externe, zu kühlende Einrichtung 14 sind Teil des zweiten Kühlkreislaufs oder Kühlsystems 16.

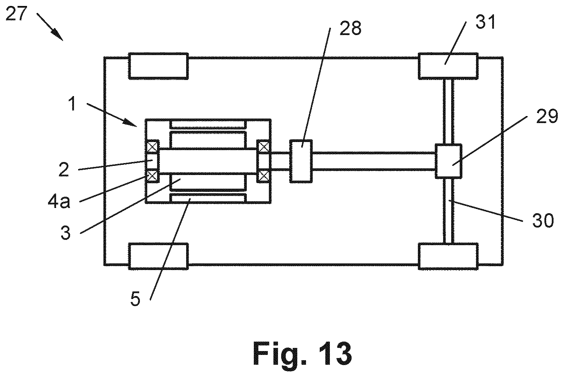

Beispielsweise kann die in der Fig. 2 dargestellte Anordnung in ein Fahrzeug eingebaut sein, wobei die elektrische Maschine 1 insbesondere einen Antriebsmotor für das Fahrzeug bilden kann (vergleiche auch Fig. 13). Zum Beispiel kann der externe Wärmetauscher 12 frontseitig im Fahrzeug angeordnet sein und durch die Umgebungsluft beziehungsweise den Fahrtwind gekühlt werden. Selbstverständlich kann im Bereich des externen Wärmetauschers 12 auch ein Gebläse beziehungsweise ein Ventilator zur Unterstützung der Kühlwirkung angeordnet sein, insbesondere zur Unterstützung der Kühlwirkung im Stillstand des Fahrzeugs. Beispielsweise kann Wasser, beziehungsweise mit einem Gefrierschutz versetztes Wasser, als Wärmeträger im ersten Kühlsystem 15 fungieren. Mit Hilfe des Kühlwassers, das den ersten Kühlmittelkanal 9 durchströmt, wird die elektrische Maschine 1 gekühlt. Dazu wird in der elektrischen Maschine 1 erzeugte Wärme mit der ersten Pumpe 11 über das Kühlwasser zum externen Wärmetauscher 12 transportiert und dort an die Umgebungsluft abgegeben.

Das Gehäuse 8 der elektrischen Maschine 1 bildet aber gleichzeitig auch einen Wärmetauscher zwischen dem ersten Kühlsystem 15 und dem zweiten Kühlsystem 16. Ist die zweite Pumpe 13 in Betrieb so wird in der externen zu kühlenden Einrichtung 14 entstehende Wärme über den Wärmeträger im zweiten Kühlsystem 16 zur elektrischen Maschine 1 transportiert und dort in das erste Kühlsystem 15 übertragen. Von dort wird die Wärme in der schon beschriebenen Weise zum externen Wärmetauscher 12 transportiert und dort an die Umgebungsluft abgegeben. Somit kann die externe zu kühlenden Einrichtung 14 ebenfalls gekühlt werden, ohne dass hierzu ein gesonderter Wärmetauscher nötig wäre.

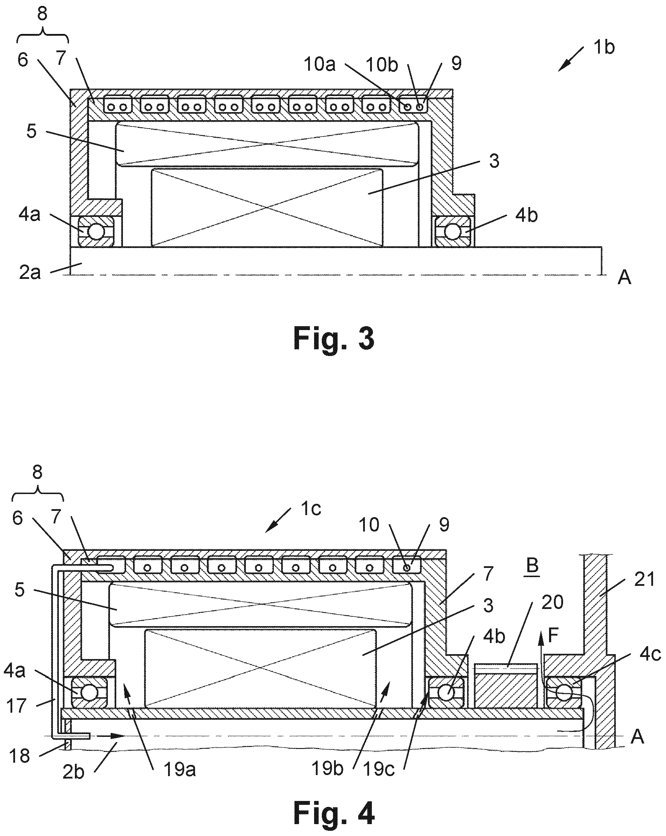

Bei der externen zu kühlenden Einrichtung 14 kann es sich insbesondere um ein Getriebe handeln, und bei dem Wärmeträger im zweiten Kühlsystem 16 kann es sich insbesondere um Getriebeöl handeln (siehe auch Fig. 4).

Selbstverständlich ist die prinzipielle Funktionsweise des in der elektrischen Maschine 1 enthaltenen Wärmetauschers nicht an die oben im Zusammenhang mit der Fig. 2 beschriebene Ausführungsform gebunden, sondern diese ist rein illustrativ zu sehen. Die gezeigte Anordnung kann auch an einem anderen Ort als in einem Fahrzeug angeordnet sein, und bei der externen zu kühlenden Einrichtung 14 muss es sich nicht um ein Getriebe handeln. Auch die für das erste Kühlsystem 15 und das zweite Kühlsystem 16 vorgeschlagenen Wärmeträger sind rein beispielhaft zu sehen, und es können auch andere flüssige oder auch gasförmige Wärmeträger verwendet werden. Bei gasförmigen Wärmeträgern kann auch ein Phasenwechsel zwischen flüssigem und gasförmigen Aggregatszustand erfolgen. Insbesondere kann in dem betreffenden Kühlsystem auch ein Kompressor vorgesehen sein.

Weiterhin wird angemerkt, dass die Kühlmittelkanäle 9, 10 nicht notgedrungen entlang einer Schraubenlinie verlaufen müssen, sondern auch anders verlaufen können. Insbesondere können auch mehrere parallel durchflossene erste Kühlmittelkanäle 9 und/oder mehrere parallel durchflossene zweite Kühlmittelkanäle 10 vorgesehen sein. Beispielsweise können mehrere erste Kühlmittelkanäle 9 von einem ersten Sammler ausgehen und in einen zweiten Sammler münden. Insbesondere können die ersten Kühlmittelkanäle 9 dann in axialer Richtung verlaufen oder entlang von Kreisen um die Rotationsachse A. Für die zweiten Kühlmittelkanäle 10 gilt das zu den ersten Kühlmittelkanälen 9 Gesagte sinngemäß.

Schließlich wird auch angemerkt, dass die Kühlmittelkanäle 9, 10 - so wie das in der Fig. 2 dargestellt ist - vorteilhaft gegensinnig durchströmt werden und dann mit dem Gehäuse 8 einen Gegenstrom-Wärmetauscher ausbilden. Prinzipiell können die Kühlmittelkanäle 9, 10 aber auch gleichsinnig durchströmt werden und bilden dann mit dem Gehäuse 8 einen Gleichstrom-Wärmetauscher aus.

Fig. 3 zeigt nun ein weiteres Beispiel einer elektrischen Maschine 1b, welche der in Fig. 1 dargestellten elektrischen Maschine 1a sehr ähnlich ist. Im Unterschied dazu sind bei der elektrischen Maschine 1b pro erstem Kühlmittelkanal 9 zwei zweite Kühlmittelkanäle 10a, 10b vorgesehen. Konkret sind die zweiten Kühlmittelkanäle 10a, 10b in dem gezeigten Beispiel als Rohre vorgesehen. Denkbar wäre aber wiederum, dass die zweiten Kühlmittelkanäle 10a, 10b in das Gehäuse 8 eingegossen sind.

Die zweiten Kühlmittelkanäle 10a, 10b können unterschiedlichen Kühlsystemen angehören oder gegensinnig durchflossene Abschnitte eines einzigen zweiten Kühlsystems 16 bilden. Gehören die zweiten Kühlmittelkanäle 10a, 10b unterschiedlichen Kühlsystemen an, so kann in der Fig. 2 das zweite Kühlsystem 16 verdoppelt werden, wodurch eine weitere zu kühlende Einrichtung gekühlt werden kann. Dies ist insbesondere dann von Vorteil, wenn in den beiden Kühlsystemen unterschiedliche Wärmeträger verwendet werden oder verwendet werden müssen und die weitere zu kühlende Einrichtung nicht in das zweite Kühlsystem 16 eingefügt werden kann.

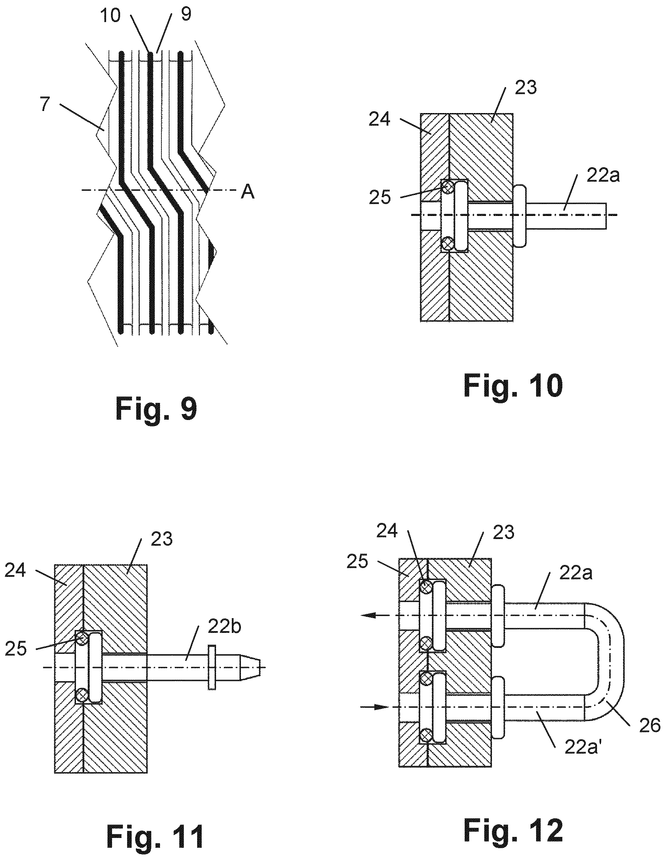

Bilden die zweiten Kühlmittelkanäle 10a, 10b gegensinnig durchflossene Abschnitte eines einzigen, zweiten Kühlsystems 16, dann kann dadurch beispielsweise die wärmeabgebende Fläche im zweiten Kühlsystem 16 verdoppelt und die Kühlleistung daher ebenso nahezu verdoppelt werden. Beispielsweise werden die beiden zweiten Kühlmittelkanäle 10a, 10b dazu an einem Ende verbunden (siehe auch Fig. 12).

Fig. 4 zeigt ein weiteres Beispiel einer elektrischen Maschine 1c, welche der in Fig. 1 dargestellten elektrischen Maschine 1a wiederum ähnlich ist. Im Unterschied dazu ist die Rotorwelle 2b hohl ausgebildet und mit dem zweiten Kühlmittelkanal 10 des zweiten Kühlsystems 16 hydraulisch verbunden. Zu diesem Zweck ist der zweite Kühlmittelkanal 10 mit einem Rohr 17 verbunden, das in den Bereich der Rotorwelle 2b und dort durch eine Dichtscheibe 18 in das Innere der Rotorwelle 2b geführt ist. Selbstverständlich kann auch direkt das den zweiten Kühlmittelkanal 10 bildende Rohr in den Bereich der Rotorwelle 2b und dort durch eine Dichtscheibe 18 in das Innere der Rotorwelle 2b geführt sein. Somit durchströmt der Wärmeträger im zweiten Kühlsystem 16 auch die Rotorwelle 2b. Von dort kann dieser auch über Kühl-/Schmierbohrungen 19a..19c in das Innere der elektrischen Maschine 1 gelangen und den Rotor 3 sowie die Lager 4a, 4b kühlen und - vorausgesetzt bei dem zweiten Wärmeträger handelt es sich um Öl - die Lager 4a, 4b auch schmieren.

In dem in Fig. 4 gezeigten Beispiel ist weiterhin ein Getriebe an die elektrische Maschine 1 gekoppelt. Die in Fig. 4 gezeigte Anordnung ist daher Teil eines Getriebemotors. Konkret sitzt ein Ritzel 20 direkt auf der Rotorwelle 2b und treibt ein nicht dargestelltes, weiteres Zahnrad des Getriebes an. Das Ritzel 20 läuft dabei im Inneren eines Getriebegehäuses 21, das heißt im Getriebeinnenraum B des Getriebegehäuses 21.

In dem gezeigten Beispiel ist das Getriebe mit dem zweiten Kühlmittelkanal 10 des zweiten Kühlsystems 16 hydraulisch verbunden. Konkret erfolgt dies über ein auf der Rotorwelle 2b angeordnetes Lager 4c. Die Flussrichtung F zeigt dabei den Verlauf des Wärmeträgers durch die Rotorwelle 2b und durch das Lager 4c in den Getriebeinnenraum B. Die Rotorwelle 2b, das Lager 4c sowie der Getriebeinnenraum B sind in diesem Beispiel somit Teil des zweiten Kühlsystems 16.

An dieser Stelle wird angemerkt, dass die in der Fig. 4 beschriebene Funktion nicht an genau die dort dargestellte Anordnung gebunden ist, sondern Teile auch abweichend ausgebildet sein können. Beispielsweise kann das Getriebe eine gesonderte (hohle) Getriebewelle aufweisen, die mit der Rotorwelle 2b verbunden ist. Auch ist die Durchströmung des Lagers 2c nicht zwingend, sondern die hydraulische Verbindung zwischen der Rotorwelle 2b und dem Getriebe kann auch über eine gesonderte Leitung erfolgen. Daneben sind auch noch andere Variationen denkbar.

Fig. 5 zeigt nun ergänzend eine schematisierte Darstellung der Kühlmittelkanäle 9, 10 der elektrischen Maschine 1a aus Fig. 1, wobei der (innere) zweite Gehäuseteil 7 isoliert vom (äußeren) ersten Gehäuseteil 6 in Seitenansicht dargestellt ist. Das heißt, der (äußere) erste Gehäuseteil 6 ist in der Fig. 5 weggelassen.

Fig. 6 ist ähnlich zu Fig. 5, zeigt jedoch eine schematisierte Darstellung der Kühlmittelkanäle 9, 10 der elektrischen Maschine 1a aus Fig. 3.

Fig. 7 ist ähnlich zu Fig. 5, zeigt jedoch eine schematisierte Darstellung von Kühlmittelkanälen 9, 10, die beide in das Gehäuse 8 der elektrischen Maschine 1 eingegossen sind. Der zweite Kühlmittelkanal 10 ist in diesem Beispiel darüber hinaus nicht im, sondern neben dem ersten Kühlmittelkanal 9 angeordnet. Abweichend zu der Darstellung der Fig. 5 ist der (äußere) erste Gehäuseteil 6 hier im Schnitt dargestellt.

Fig. 8 ist wiederum ähnlich zu Fig. 7, jedoch ist der zweite Kühlmittelkanal 10 durch ein gesondertes Rohr gebildet, das in einer Rille im zweiten Gehäuseteil 7 angeordnet ist.

Fig. 9 ist wieder der Fig. 5 ähnlich. Im Unterschied dazu verlaufen die Kühlmittelkanäle 9, 10 jedoch nicht entlang einer Schraubenlinie mit konstanter Steigung, sondern die Kühlmittelkanäle 9, 10 verlaufen in einem weiten Umfangsbereich entlang von Kreisen um die Rotationsachse A. Lediglich in einem engen Umfangsbereich weist der Verlauf der Kühlmittelkanäle 9, 10 eine Axialkomponente auf.

Fig. 10 zeigt nun ein erstes Beispiel für einen Dichtnippel 22a, welcher in einer ersten Platte 23 eingebaut ist, und welcher zu einer zweiten Platte 24 hin mit Hilfe eines Dichtrings 25 abgedichtet ist. Der Dichtnippel 22a kann insbesondere mit dem zweiten Kühlmittelkanal 10 hydraulisch verbunden sein und für den Anschluss eines Schlauchs oder Rohrs, welcher oder welches ebenfalls Teil des zweiten Kühlsystems 16 ist, ausgebildet sein. Die erste Platte 23 und die zweite Platte 24 können Teil des ersten Gehäuseteils 6 und des zweiten Gehäuseteils 7 sein.

Fig. 11 zeigt ein zweites Beispiel für einen Dichtnippel 22b, welcher wiederum in einer ersten Platte 23 eingebaut ist, und welcher zu einer zweiten Platte 24 hin mit Hilfe eines Dichtrings 25 abgedichtet ist. Der Dichtnippel 22b kann wieder mit dem zweiten Kühlmittelkanal 10 hydraulisch verbunden sein und für den Anschluss eines Schlauchs oder Rohrs, welcher oder welches ebenfalls Teil des zweiten Kühlsystems 16 ist, ausgebildet sein.

Fig. 12 zeigt ein Beispiel für einen Schlauch- oder Rohranschluss, das dem in Fig. 10 gezeigten Beispiel für einen Schlauch- oder Rohranschluss sehr ähnlich ist. Im Unterschied dazu sind aber zwei Dichtnippel 22a, 22a' vorgesehen. Beispielsweise kann der Dichtnippel 22a hydraulisch mit dem zweiten Kühlmittelkanal 10a und der Dichtnippel 22a' hydraulisch mit dem zweiten Kühlmittelkanal 10b der in Fig. 3 dargestellten, elektrischen Maschine 1b verbunden sein. Die beiden Dichtnippel 22a, 22a' können daher wiederum Teil zweier verschiedener Kühlsysteme sein, oder - so wie das in der Fig. 12 der Fall ist - ein und demselben Kühlsystem 16 angehören. Zu diesem Zweck sind die beiden Dichtnippel 22a, 22a' mit einem Verbindungsrohr beziehungsweise einer Rohrbrücke 26 oder einem Schlauch verbunden. Dadurch werden die zweiten Kühlmittelkanäle 10a, 10b gegensinnig durchflossen. Die elektrische Maschine 1b kann durch die vorgeschlagenen Maßnahmen leicht auf unterschiedliche Einsatzzwecke angepasst werden und ohne Verbindung der beiden Dichtnippel 22a, 22a' für unterschiedliche Kühlsysteme 16 und mit Verbindung der beiden Dichtnippel 22a, 22a' für ein und dasselbe Kühlsystem 16 eingesetzt werden.

Die Fig. 13 zeigt schließlich die in ein Fahrzeug 27 eingebaute elektrische Maschine 1. Das Fahrzeug 27 weist wenigstens zwei Achsen auf, von denen wenigstens eine angetrieben ist. Konkret ist der Elektromotor 1 mit einem optionalen Getriebe 28 und einem Differentialgetriebe 29 verbunden. An das Differentialgetriebe 29 schließen die Halbachsen 30 der Hinterachse an. An den Halbachsen 30 sind schließlich die angetriebenen Räder 31 montiert. Der Antrieb des Fahrzeugs 27 erfolgt zumindest teilweise oder zeitweise durch die elektrische Maschine 1. Das heißt, die elektrische Maschine 1 kann zum alleinigen Antrieb des Fahrzeugs 27 dienen oder zum Beispiel im Verbund mit einer Verbrennungskraftmaschine vorgesehen sein (Hybridantrieb).

Insbesondere können das Getriebe 28 und/oder das Differentialgetriebe 29 die zu kühlende Einrichtung 14 in der Fig. 2 bilden und somit Teil des zweiten Kühlkreislaufs 16 sein. Das Getriebe 28 kann insbesondere direkt an die elektrische Maschine 1 angeflanscht sein, und das Differentialgetriebe 29 kann auch in das Getriebe 28 integriert sein. Insbesondere können die elektrische Maschine 1, das Getriebe 28 und das Differentialgetriebe 29 eine Baueinheit bilden.

An dieser Stelle wird auch angemerkt, dass die elektrische Maschine 1 beziehungsweise die weitere externe Einrichtung 14 mit den vorgeschlagenen Maßnahmen nicht nur gekühlt, sondern natürlich auch beheizt werden kann. Beispielsweise können die elektrische Maschine 1 und das Getriebe 28 bei niedrigen Außentemperaturen vorgeheizt werden. Der Wärmetransport erfolgt dabei in zur Kühlung entgegengesetzten Richtung. Eventuell kann dazu im ersten Kühlkreislauf 15 und/oder im zweiten Kühlkreislauf 16 ein Heizer vorgesehen sein.

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Elektrische Maschine (1, 1a..1c), umfassend
- ein Gehäuse (8),
- einen im Gehäuse (8) angeordneten und mit diesem fix verbundenen Stator (5) und
- einen im Gehäuse (8) angeordneten Rotor (3), der auf einer Rotorwelle (2a, 2b) angeordnet ist und gegenüber dem Stator (5) um die Rotationsachse (A) des Rotors (3) und der Rotorwelle (2a, 2b) drehbar gelagert ist, wobei
- das Gehäuse (8) im Bereich des Stators (5) zumindest einen ersten Kühlmittelkanal (9) eines ersten Kühlkreislaufs (15) aufweist,
**dadurch gekennzeichnet, dass**
i- im Gehäuse (8) in dem Bereich des Stators (5) zumindest ein zweiter Kühlmittelkanal (10, 10a, 10b) eines zweiten Kühlkreislaufs (16) angeordnet ist und das Gehäuse (8) der elektrischen Maschine (1, 1a..1c) einen Wärmetauscher zwischen dem ersten Kühlkreislauf (15) und dem zweiten Kühlkreislauf (16) bildet, **dadurch gekennzeichnet dass**
der zumindest eine erste Kühlmittelkanal (9) in das Gehäuse (8) der elektrischen Maschine (1, 1a..1c) eingegossen ist und der zumindest eine zweite Kühlmittelkanal (10, 10a, 10b) durch ein Rohr gebildet ist, welches in dem zumindest einen ersten Kühlmittelkanal (9) angeordnet ist.

2. . Elektrische Maschine (1, 1a..1c) nach Anspruch 1, **dadurch gekennzeichnet, dass** die elektrische Maschine (1, 1a..1c) einen Dichtnippel (22a, 22a', 22b) aufweist, welcher mit dem zumindest einen zweiten Kühlmittelkanal (10, 10a, 10b) hydraulisch verbunden ist und für den Anschluss eines Schlauchs oder Rohrs ausgebildet ist.

3. . Elektrische Maschine (1, 1a..1c) nach einem der Ansprüche 1 oder 2, **dadurch gekennzeichnet, dass** der zumindest eine erste Kühlmittelkanal (9) und der zumindest eine zweite Kühlmittelkanal (10, 10a, 10b) schraubenlinienförmig verlaufen.

4. . Elektrische Maschine (1, 1a..1c) nach einem der Ansprüche 1 bis 3, **dadurch gekennzeichnet, dass** pro erstem Kühlmittelkanal (9) zwei zweite Kühlmittelkanäle (10, 10a, 10b) vorgesehen sind, welche
- unterschiedlichen Kühlkreisläufen angehören oder
- gegensinnig durchflossene Abschnitte eines einzigen zweiten Kühlkreislaufs (16) bilden.

5. . Elektrische Maschine (1, 1a..1c) nach einem der Ansprüche 1 bis 4, **dadurch gekennzeichnet, dass** die Rotorwelle (2b) hohl ausgebildet ist und mit dem zumindest einen zweiten Kühlmittelkanal (10, 10a, 10b) des zweiten Kühlkreislaufs (16) hydraulisch verbunden ist.

6. . Getriebemotor, umfassend ein Getriebe und eine an das Getriebe gekoppelte elektrische Maschine (1, 1a..1c) nach einem der Ansprüche 1 bis 5, **dadurch gekennzeichnet, dass** das Getriebe mit dem zumindest einen zweiten Kühlmittelkanal (10, 10a, 10b) des zweiten Kühlkreislaufs (16) hydraulisch verbunden ist.

7. . Getriebemotor nach Anspruch 6, **dadurch gekennzeichnet, dass** die Rotorwelle (2b) hohl ausgebildet ist und über ein auf der Rotorwelle (2b) angeordnetes Lager (4c) mit dem Getriebe hydraulisch verbunden ist und die Rotorwelle (2b) und das Lager (4c) Teil des zweiten Kühlkreislaufs (16) sind.

8. . Fahrzeug (27) mit wenigstens einer angetrieben Achse, **dadurch gekennzeichnet dass** der besagte Antrieb zumindest teilweise oder zeitweise durch die elektrische Maschine (1, 1a..1c) nach einem der Ansprüche 1 bis 5 oder durch einen Getriebemotor nach Anspruch 6 oder 7 erfolgt.

## Claims

1. Electric machine (1, 1a..1c), comprising:
a housing (8),
a stator (5) arranged in the housing (8) and fixedly connected to it, and
a rotor (3) arranged in the housing (8), which is arranged on a rotor shaft (2a, 2b) and rotatable supported relative to the stator (5) about the axis of rotation (A) of the rotor (3) and the rotor shaft (2a, 2b),
wherein the housing (8) comprises at least a first coolant channel (9) of a first cooling circuit (15) in the area of the stator (5),
wherein in the housing (8) at least one second coolant channel (10, 10a, 10b) of a second cooling circuit (16) is arranged in the area of the stator (5), and the housing (8) of the electric machine (1, 1a..1c) forms a heat exchanger between the first cooling circuit (15) and the second cooling circuit (16),
**characterized in that**
the at least one first coolant channel (9) is cast into the housing (8) of the electric machine (1, 1a..1c), and the at least one second coolant channel (10, 10a, 10b) is formed by a tube, which is arranged in the at least one first coolant channel (9).

2. Electric machine (1, 1a..1c) according to claim 1, **characterized in that** the electric machine (1, 1a..1c) comprises a sealing nipple (22a, 22a', 22b), which is hydraulically connected to the at least one second coolant channel (10, 10a, 10b) and is designed for connecting a hose or pipe.

3. Electric machine (1, 1a..1c) according to claim 1 or 2, **characterized in that** the at least one first coolant channel (9) and the at least one second coolant channel (10, 10a, 10b) run helically.

4. Electric machine (1, 1a..1c) according to one of the claims 1 to 3, **characterized in that** two second coolant channels (10, 10a, 10b) are provided per first coolant channel (9), which
belong to different cooling circuits, or
form oppositely flowed-through sections of a single second cooling circuit (16).

5. Electric machine (1, 1a..1c) according to one of the claims 1 to 4, **characterized in that** the rotor shaft (2b) is hollow and hydraulically connected to the at least one second coolant channel (10, 10a, 10b) of the second cooling circuit (16).

6. Gear motor, comprising a gearbox and an electric machine (1, 1a..1c) coupled to the gearbox according to one of claims 1 to 5, **characterized in that** the gearbox is hydraulically connected to the at least one second coolant channel (10, 10a, 10b) of the second cooling circuit (16).

7. Gear motor according to claim 6, **characterized in that** the rotor shaft (2b) is hollow and hydraulically connected to the gearbox via a bearing (4c) arranged on the rotor shaft (2b), and the rotor shaft (2b) and the bearing (4c) form part of the second cooling circuit (16).

8. Vehicle (27) with at least one driven axle, **characterized in that** said drive is at least partially or temporarily provided by the electric machine (1, 1a..1c) according to one of the claims 1 to 5 or by a gear motor according to claim 6 or 7.

## Revendications

1. Machine électrique (1, 1a..1c), comprenant
un carter (8),
un stator (5) disposé dans le carter (8) et fixé à celui-ci, et
un rotor (3) disposé dans le carter (8), monté sur un arbre de rotor (2a, 2b) et monté rotatif par rapport au stator (5) autour de l'axe de rotation (A) du rotor (3) et de l'arbre de rotor (2a, 2b),
le carter (8) comprenant au moins un premier canal de refroidissement (9) d'un premier circuit de refroidissement (15) dans la zone du stator (5),
dans lequel au moins un second canal de refroidissement (10, 10a, 10b) d'un second circuit de refroidissement (16) est également disposé dans le carter (8) dans la zone du stator (5), et le carter (8) de la machine électrique (1, 1a..1c) forme un échangeur thermique entre le premier circuit de refroidissement (15) et le second circuit de refroidissement (16),
**caractérisé en ce que**
le ou les premiers canaux de refroidissement (9) sont coulés dans le carter (8) de la machine électrique (1, 1a..1c), et le ou les seconds canaux de refroidissement (10, 10a, 10b) sont formés par un tube, lequel est disposé dans le ou les premiers canaux de refroidissement (9).

2. Machine électrique (1, 1a..1c) selon la revendication 1, **caractérisée en ce qu'**elle comprend un raccord étanche (22a, 22a', 22b), qui est raccordé hydrauliquement au moins à un second canal de refroidissement (10, 10a, 10b) et est conçu pour le raccordement d'un tuyau ou d'un conduit.

3. Machine électrique (1, 1a..1c) selon la revendication 1 ou 2, **caractérisée en ce que** le ou les premiers canaux de refroidissement (9) et le ou les seconds canaux de refroidissement (10, 10a, 10b) s'étendent en spirale (en forme d'hélice).

4. Machine électrique (1, 1a..1c) selon l'une des revendications 1 à 3, **caractérisée en ce que** deux seconds canaux de refroidissement (10, 10a, 10b) sont prévus par premier canal de refroidissement (9), qui soit
appartiennent à des circuits de refroidissement différents, ou
forment des sections parcourues en sens opposé d'un seul et même second circuit de refroidissement (16).

5. Machine électrique (1, 1a..1c) selon l'une des revendications 1 à 4, **caractérisée en ce que** l'arbre de rotor (2b) est creux et raccordé hydrauliquement à au moins un second canal de refroidissement (10, 10a, 10b) du second circuit de refroidissement (16).

6. Motoréducteur, comprenant une boîte de vitesses et une machine électrique (1, 1a..1c) couplée à ladite boîte de vitesses selon l'une des revendications 1 à 5, **caractérisé en ce que** la boîte de vitesses est raccordée hydrauliquement à au moins un second canal de refroidissement (10, 10a, 10b) du second circuit de refroidissement (16).

7. Motoréducteur selon la revendication 6, **caractérisé en ce que** l'arbre de rotor (2b) est creux et raccordé hydrauliquement à la boîte de vitesses via un palier (4c) disposé sur l'arbre de rotor (2b), et l'arbre de rotor (2b) ainsi que le palier (4c) font partie du second circuit de refroidissement (16).

8. Véhicule (27) avec au moins un essieu moteur, **caractérisé en ce que** ladite propulsion est assurée au moins partiellement ou temporairement par la machine électrique (1, 1a..1c) selon l'une des revendications 1 à 5 ou par un motoréducteur selon la revendication 6 ou 7.
